# EUROPEAN PATENT SPECIFICATION

(11) **EP 3 679 106 B1**
(45) Date of publication and mention of the grant of the patent: **26.06.2024**
(21) Application number: 17924463.7
(22) Date of filing: 05.09.2017
(51) Int. Cl.: C09J 175/04, C09D 175/08, C08G 18/32, C08G 18/10, C08G 18/08, C08G 18/79

(54) **TWO-COMPONENT SOLVENT BASED ADHESIVE COMPOSITIONS AND METHODS OF MAKING SAME**
LÖSUNGSMITTELFREIE ZWEIKOMPONENTEN-KLEBSTOFFZUSAMMENSETZUNGEN UND VERFAHREN ZUR HERSTELLUNG DAVON
COMPOSITIONS ADHÉSIVES À DEUX CONSTITUANTS À BASE DE SOLVANT ET DES PROCÉDÉS POUR LEUR PRÉPARATION

(43) Date of publication of application: 15.07.2020
(73) Proprietor: Dow Global Technologies LLC, Midland, MI 48674 (US); Rohm and Haas Company, Collegeville, PA 19426 (US)
(72) Inventor: CHEN, Gaobing, Shanghai 201203 (CN); BAI, Chenyan, Shanghai 201203 (CN)
(74) Representative: Boult Wade Tennant LLP
(86) International application number: PCT/CN2017/100468
(87) International publication number: WO 2019/046998

(56) References cited:
- EP-A1- 1 985 679
- CN-A- 101 497 776
- CN-A- 102 844 398
- US-A1- 2004 138 402
- US-A1- 2010 297 427
- US-A1- 2012 258 306

## Description

### FIELD OF THE DISCLOSURE

The instant disclosure relates to two-component adhesive compositions. More particularly, the disclosure relates to two-component polyurethane adhesive compositions for use in laminate films, and methods of making the same. The compositions have improved bond strength, heat seal strength, and heat resistance.

### BACKGROUND OF THE DISCLOSURE

Adhesive compositions are useful for a wide variety of purposes. For instance, adhesive compositions are used to bond together substrates such as polyethylenes, polypropylenes, polyesters, polyamides, metals, papers, or cellophane to form composite films, i.e., laminates. The use of adhesives in different laminating end-use applications is generally known. For example, adhesives can be used to manufacture film/film and film/foil laminates for packaging industry, especially for food packaging.

EP-A-1,985,679 relates to a laminating adhesive comprising: a polyol; an acid-modified polyol obtained by reaction of a hydrophobic polyol containing a hydrocarbon moiety having 12 to 80 carbon atoms in its molecule in an amount of 30 to 95% by weight or a derivative thereof with an aromatic polycarboxylic acid anhydride and having a carboxyl group at a molecular terminal thereof; an organic polyisocyanate compound; and a silane coupling agent.

A conventional two-component polyurethane-based laminating adhesive includes a first component comprising a polyisocyanate and a second component comprising one or more polyols. The first component is obtained by the reaction of a diisocyanate monomer with polyols. The second component is polyester polyol or polyether polyol or their mixture. Each component can optionally include one or more additives. The two components are combined in a predetermined ratio before applied on a film/foil substrate, and the combination is then laminated to another film/foil substrate.

Two-component polyurethane-based laminating adhesives usually contain solvent to reduce viscosity to a required level for application purposes, and offer high initial bonds and high final bonds strength. However, the bond strength and heat seal strength of the adhesives after heat treatment are not as good as expected sometimes.

It is desirable to develop adhesives with improved bond strength and heat seal strength even after heat treatment.

### SUMMARY OF THE DISCLOSURE

The present disclosure provides a two-component polyurethane adhesive composition comprising an aromatic polyisocyanate component and a polyol component comprising at least one polyester polyol and a polyol having two or more OH groups and a hydrogen-bridging group; wherein the aromatic polyisocyanate component has an average NCO functionality of at least 2.8 and not to exceed 5; the polyester polyol has an OH functionality of at least 1.8 and not to exceed 3, and an OH number between 2 to 45 mg KOH/g; and the polyol having two or more OH groups and a hydrogen-bridging group has an acid value of at least 50 mg KOH/g and not to exceed 200 mg KOH/g, and an OH functionality of at least 1.8 and not to exceed 3; wherein the aromatic polyisocyanate component is an aromatic polyisocyanate adduct or an aromatic polyisocyanate trimer and wherein the aromatic diisocyanate monomer used to prepare the adduct or trimer is selected from the group consisting of isomers of methylene diphenyl diisocyanate ("MDI"), isomers of toluene diisocyanate ("TDI"), isomers of naphthalene diisocyanate ("NDI"), and combinations thereof; and wherein the weight ratio of the polyol component to the polyisocyanate component is from 100:15 to 100:40.

### DETAILED DESCRIPTION OF THE DISCLOSURE

The two-component polyurethane adhesive composition according to this disclosure comprises a polyisocyanate component and a polyol component.

### Polyisocyanate Component

The polyisocyanate component is an aromatic polyisocyanate adduct or trimer.

The aromatic polyisocyanate adduct was prepared by reacting excess quantities of aromatic diisocyanate, with low molecular weight glycols and polyols having molecular weight less than 400, such as trimethylolpropane, glycerin, 1,2-dihydroxy propane and mixture thereof. Commercially available aromatic polyisocyanate is Desmodur L75 from Covestro.

The aromatic polyisocyanate trimer was prepared by trimerization of aromatic diisocyanates in the presence of a catalyst. Commercially available aromatic polyisocyanate is Desmodur L1470 from Covestro.

As used herein, the "diisocyanate monomer" is any compound that contains two isocyanate groups per molecular. An "aromatic diisocyanate monomer" is a diisocyanate monomer that contains one or more aromatic rings.

The aromatic diisocyanate monomer include isomers of methylene diphenyl diisocyanate ("MDI") such as 4,4-MDI and 2,4-MDI, isomers of toluene diisocyanate ("TDI") such as 2,4-TDI, 2,6-TDI, isomers of naphthalene diisocyanate ("NDI") such as 1,5-NDI, and combinations thereof.

Suitable examples of the glycols and polyols having molecular weight less than 400 include, but are not limited to, diethylene glycol, ethylene glycol, triethylene glycol, 1,3-propanediol, 1,3-butanediol, 1,4-butanediol, 1,6-hexanediol, and neopentyl glycol, trimethylpropane (TMP), glycerol, and pentaerythrotol.

Polyisocyanate component is characterized by the parameter "%NCO", which is the amount of NCO groups by weight based on the weight of the polyisocyanate component. The parameter %NCO is measured according to ASTM D 2572-97(2010). The polyisocyanate component of the present disclosure has a %NCO of at least 7 wt%, or at least 9 wt%, or at least 11 wt%. In some embodiments, the isocyanate component has a %NCO not to exceed 19 wt%, or 17 wt%, or 15 wt%.

The polyisocyanate component has an average NCO functionality of at least 2.8 and not exceed 5 (i.e., 2.8 <_ *f* <_ 5).

The polyisocyanate component has a solid content of at least 50% and uses ethyl acetate or ketone as a solvent.

The polyisocyanate component may, optionally, comprise one or more catalysts. Suitable examples of the catalysts include, but are not limited to, dibutyltin dilaurate, zinc acetate, 2,2-dimorpholinodiethylether, and combinations thereof.

### Polyol Component

The two component polyurethane adhesive composition further comprises a polyol component comprising at least one polyester polyol and a polyol having two or more OH groups and a hydrogen-bridging group.

The amount of the polyester polyol in the polyol component is, by weight based on the weight of the polyol component, at least 78 wt%, or at least 80 wt%, or at least 82 wt%. The amount of the polyester polyol in the polyol component is not to exceed, by weight based on the weight of the polyol component, 99 wt%, or 97 wt%, or 95 wt%.

Polyester polyols suitable for use in the polyol component have a molecular weight of at least 4,000 g/mol. In addition, the suitable polyester polyols have an OH functionality of at least 1.8 and not to exceed 3 (*i.e.,* 1.8 ≤ *f* ≤ 3) and an OH number between 2-45 mg KOH/g. "OH number" is characterized by the milligrams of potassium hydroxide equivalent to the hydroxyl content in one gram of polyol.

Polyester polyols suitable for use in the present disclosure are known polycondensates of diols and also, optionally, polyols (*e.g.,* triols, tetraols), and of dicarboxylic acids. The polyester polyols can also be derived from dicarboxylic acids, their corresponding anhydrides, or corresponding esters of lower alcohols.

Suitable diols include, but are not limited to, ethylene glycol, butylene glycol, diethylene glycol, triethylene glycol, polyalkylene glycols, such as polyethylene glycol, and also 1, 2-propanediol, 1, 3-propanediol, 1, 3-butanediol, 1, 4-butanediol, 1, 6-hexanediol, and neopentyl glycol. In order to achieve a polyester polyol having an OH functionality greater than 2, polyols having an OH functionality of 3 can optionally be included in the adhesive composition (*e.g.*, trimethylolpropane, glycerol, erythritol, pentaerythritol, trimethylolbenzene or trishydroxyethyl isocyanurate).

Suitable dicarboxylic acids include, but are not limited to, aliphatic acids, aromatic acids, and combinations thereof. Examples of suitable aromatic acids include phthalic acid, isophthalic acid, terephthalic acid, and tetrahydrophthalic acid. Examples of suitable aliphatic acids include hexahydrophthalic acid, cyclohexane dicarboxylic acid, adipic acid, azelaic acid, sebacic acid, glutaric acid, tetrachlorophthalic acid, maleic acid, fumaric acid, itaconic acid, malonic acid, suberic acid, 2-methyl succinic acid, 3,3-diethyl glutaric acid, 2,2-dimethyl succinic acid, and trimellitic acid. Aanhydrides of such acids may also be used. Further, monocarboxylic acids, such as benzoic acid and hexane carboxylic acid, should be minimized or excluded from the disclosed compositions. Saturated aliphatic or aromatic acids, such as adipic acid or isophthalic acid, are preferred.

The polyol component further comprises a polyol having two or more OH groups at the end of the polyol molecular chain and at least one hydrogen-bridging group in the side molecular chain. Suitable examples of hydrogen-bridging groups include, but are not limited to, O=C-O⁻, O=C-C-O⁻, and O=C-C=C-O⁻, and pronated forms thereof. The polyol having two or more OH groups and a hydrogen-bridging group has an acid value of at least 50 mg KOH/g and not to exceed 200 mg KOH/g. In addition, this polyol has a molecular weight of at least 600 g/mol and not to exceed 3,000 g/mol. Still further, this polyol has an OH functionality of at least 1.8 and not to exceed 3 (*i.e.,* 1.8 ≤ *f* ≤ 3).

The amount of the polyol having two or more OH groups and a hydrogen-bridging group in the polyol component is, by weight based on the weight of the polyol component, at least 1 wt%, or at least 3 wt%, or at least 5 wt%. The amount of the polyol having two or more OH groups and a hydrogen-bridging group in the polyol component is not to exceed, by weight based on the weight of the polyol component, 22 wt%, or 20 wt%, or 18 wt%.

The weight ratio of the polyol component to the polyisocyanate component is from 100:15 to 100:40.

It is contemplated that the polyisocyanate component and the polyol component of the disclosed two-component polyurethane adhesive composition can be made separately and, if desired, stored separately until it is desired to use the adhesive composition. In some embodiments, both the polyisocyanate component and the polyol component are each liquid at 25°C. When it is desired to use the adhesive composition, the polyisocyanate component and the polyol component are brought into contact with each other and mixed together. It is contemplated that when these two components are brought into contact, a curing reaction begins in which the isocyanate groups react with the hydroxyl groups to form urethane links. The adhesive composition formed by bringing the two components into contact can be referred to as a "curable mixture."

A method of forming a laminate using an adhesive composition is also disclosed. In some embodiments, the adhesive composition, such as the adhesive composition discussed above, is in a liquid state. In some embodiments, the composition is a liquid at 25°C. Even if the composition is solid at 25°C, it is acceptable to heat the composition as necessary to put it in a liquid state. A layer of the composition is applied to a surface of a film. A "film" is any structure that is 0.5 mm or less in one dimension and is 1 cm or more in both of the other two dimensions. A polymer film is a film that is made of a polymer or mixture of polymers. In some embodiments, the thickness of the layer of the curable mixture is 1 to 5 µm.

In some embodiments, a surface of another film is brought into contact with the layer of the curable mixture to form an uncured laminate.

The curable mixture is then cured or allowed to cure. The uncured laminate may be subjected to pressure, for example by passing through nip rollers, which may or may not be heated. The uncured laminate may be heated to speed the cure reaction.

Suitable films include paper, woven and nonwoven fabric, metal foil, polymers, and metal-coated polymers. Films optionally have a surface on which an image is printed with ink; the ink may be in contact with the adhesive composition. In some embodiments, the films are polymer films and metal-coated polymer films, more preferred are polymer films.

### EXAMPLES

The present disclosure will now be explained in further detail by Illustrative Examples and Comparative Examples (collectively, "the Examples"). However, the scope of the present disclosure is not, of course, limited to the formulations set forth in the examples. Rather, the Examples are merely illustrative of the disclosure.

### Composition Preparation

The raw materials used to prepare the Examples are described below.

Polyisocyanate Component:
DESMODUR^{™} L75 is an aromatic polyisocyanate with a NCO functionality of 3 (f=3); it has a 75% solid content with EA as the solvent; and it is commercially available from Covestro company.
ADCOTE^{™} CR750 is an aromatic polyisocyanate with a NCO functionality of 2 (f=2); it has a 75% solid content with EA as the solvent; and it is commercially available from Dow Chemical company.
DESMODUR^{™} N3300 is an aliphatic polyisocyanate with a NCO functionality of from 2.8 to 5 (2.8 ≤ *f* ≤ 5); it has a 100% solid content; and it is commercially available from Covestro company.

Polyol Component:
ADCOTE^{™} 563EA is a polyester polyol with OH=26mg KOH/g and has a 82% solid content with EA as the solvent; it is commercially available from Dow Chemical company,
DMPA^{™} HA-0135 is a polyol having two or more OH groups and a hydrogen-bridging group; it has an OH number of 115 mg KOH/g; it has a 100% solid content; and it is commercially available from GEO Speciality Chemicals.

To prepare the Illustrative Examples and Comparative Examples, the isocyanate components and polyol components are mixed according to the pairings illustrated in Table 1 to form the adhesive compositions of the Examples.

The adhesive compositions of the Examples are then used to form laminates comprising polyethylene and pre-laminated aluminum foil (PET//Foil). The adhesive compositions are applied to the aluminum side at 3.0 gsm coating weight in dry, brought together with the polyethylene film, and then cured at 50°C for 48 hours to form the laminates. Once the laminate is formed, tests are conducted to analyze the bond strength, heat seal strength, and boil-in-bag resistance with water.

**Table 1: Adhesive Composition of IEs and CEs**

| | Polyisocyanate Component (PIC) | Polyol Component (PC)* | | Weight ratio of PC to PIC |
|---|---|---|---|---|
| CE1 | ADCOTE^{™} CR750 | 100% ADCOTE^{™} 563EA | | 100 : 75 |
| CE2 | ADCOTE^{™} CR750 | 95% ADCOTE^{™} 563EA | 5% DMPA^{™} HA-0135 | 100 : 80 |
| CE3 | DESMODUR^{™} N3300 | 100% ADCOTE^{™} 563EA | | 100: 9 |
| CE4 | DESMODUR^{™} N3300 | 95% ADCOTE^{™} 563EA | 5% DMPA^{™} HA-0135 | 100 : 10 |
| CE5 | DESMODUR^{™} L75 | 100% ADCOTE^{™} 563EA | | 100: 15 |
| IE1 | DESMODUR^{™} L75 | 95% ADCOTE^{™} 563EA | 5% DMPA^{™} HA-0135 | 100 : 20 |
| IE2 | DESMODUR^{™} L75 | 92.6% ADCOTE^{™} 563EA | 7.4% DMPA^{™} HA-0135 | 100 : 23.6 |
| IE3 | DESMODUR^{™} L75 | 90% ADCOTE^{™} 563EA | 10% DMPA^{™} HA-0135 | 100 : 23.6 |
| IE4 | DESMODUR^{™} L75 | 84.4% ADCOTE^{™} 563EA | 15.6% DMPA^{™} HA-0135 | 100 : 31 |
| IE5 | DESMODUR^{™} L75 | 79% ADCOTE^{™} 563EA | 21% DMPA^{™} HA-0135 | 100 : 37.5 |

| | | | | |
|---|---|---|---|---|
| * weight percent based on the total weight of the polyol component. Remark: all examples were diluted by EA to achieve 30% solid content before application. | | | | |

### Laminate Performance Testing

Laminates prepared from the adhesive compositions of the Examples are subjected to Bond Strength testing (BS). The laminates are cut into 15 mm width strips for T-peel testing under 250mm/min crosshead speed using a 5940 Series Single Column Table Top System available from Instron Corporation. During testing, the tail of each strip is pulled slightly by hand to ensure the tail remained at a 90° angle to the peeling direction. Three strips are tested for each sample and the average value is calculated. Results are in the unit of N/15mm. Relatively higher values indicate better bond strength.

Laminates prepared from the adhesive compositions of the Examples are subjected to Heat Seal strength testing (HS). The laminates are heat sealed in a HSG-C Heat-Sealing Machine available from Brugger Feinmechanik GmbH under 140°C seal temperature and 300N pressure for 1 second. The laminates are then cooled down and cut into 15mm width strips for heat seal strength testing under 250mm/min crosshead speed using a 5940 Series Single Column Table Top System available from Instron Corporation. Three strips are tested for each sample and the average value is calculated. Results are in the unit of N/15mm. Relatively higher values indicate better heat seal strength.

Laminates prepared from the adhesive compositions of the Examples are subjected to Boil-in-Bag resistance testing (BiB). The laminates are cut into 8 cm × 12 cm pieces and made into a bag through heat sealing with water inside the bag. The bags are then placed in boiling water for 30 minutes, ensuring the bags are always immersed in water during the entire boiling process. The extent of tunneling, de-lamination, and/or leakage of the bags is recorded upon completion of the boiling process. For a sample to pass the boil-in-bag resistance testing, it must show no evidence of tunneling, de-lamination, or leakage. Then bags are then opened, emptied, and cut into 15 mm width strips to test the T-peel bonding strength within 5 minutes by Instron 5943 machine. Three strips are tested to take the average value.

**Table 2: Performance Testing Results**

| | CE1 | CE2 | CE3 | CE4 | CE5 | IE1 | IE2 | IE3 | IE4 | IE5 |
|---|---|---|---|---|---|---|---|---|---|---|
| BS(N/15mm) | 3.0 | 3.4 | 3.8 | 3.8 | 9.5 | 10.6 | 13.3 | 12.5 | 11.2 | 2.8 |
| BS after BiB(N/15mm) | 2.1 | 4.3 | 1.7 | 2.5 | 3.2 | 4.7 | 4.4 | 4.6 | 4.6 | 4.5 |
| HS(N/15mm) | 20 | 22 | 33 | 22 | 49 | 54 | 52 | 54 | 55 | 54 |
| HS after BiB(N/15mm) | 19 | 22 | 20 | 20 | 26 | 43 | 45 | 43 | 42 | 46 |

IE1-5 are inventive examples which using aromatic polyisocyanate having 3 functionality and containing polyol having hydrogen-bridging group, and IE1-5 showed improved bond strength, heat seal strength especially after heat treatment (Boil in Bag). While comparative example 5 showed poor bond strength and heat seal strength after heat treatment, which using aromatic polyisocyanate having 3 functionality and without polyol having hydrogen-bridging group. CE1 and CE2 are examples using aromatic polyisocyanate having 2 functionality, which showed much poorer performance. CE3 and CE4 are examples using aliphatic polyisocyanate having more than 3 functionality, which also showed poor performance.

## Claims

1. A two-component polyurethane adhesive composition comprising an aromatic polyisocyanate component and a polyol component comprising at least one polyester polyol and a polyol having two or more OH groups and a hydrogen-bridging group; wherein the aromatic polyisocyanate component has an average NCO functionality of at least 2.8 and not to exceed 5; the polyester polyol has an OH functionality of at least 1.8 and not to exceed 3, and an OH number between 2 to 45 mg KOH/g; and the polyol having two or more OH groups and a hydrogen-bridging group has an acid value of at least 50 mg KOH/g and not to exceed 200 mg KOH/g, and an OH functionality of at least 1.8 and not to exceed 3; wherein the aromatic polyisocyanate component is an aromatic polyisocyanate adduct or an aromatic polyisocyanate trimer and wherein the aromatic diisocyanate monomer used to prepare the adduct or trimer is selected from the group consisting of isomers of methylene diphenyl diisocyanate ("MDI"), isomers of toluene diisocyanate ("TDI"), isomers of naphthalene diisocyanante ("NDI"), and combinations thereof; and wherein the weight ratio of the polyol component to the polyisocyanate component is from 100:15 to 100:40.

2. The two-component polyurethane adhesive composition according to Claim 1, wherein the aromatic diisocyanate monomer is isomers of toluene diisocyanate ("TDI").

3. The two-component polyurethane adhesive composition according to Claim 1, wherein the aromatic polyisocyanate component has a %NCO of at least 7 wt%, and not to exceed 19 wt%.

4. The two-component polyurethane adhesive composition according to Claim 1, wherein the polyester polyol is in an amount of from at least 78 wt% to less than 99 wt% based on the weight of the polyol component.

5. The two-component polyurethane adhesive composition according to Claim 1, wherein the hydrogen-bridging group is selected from O=C-O⁻, O=C-C-O⁻, and O=C-C=C-O⁻, and pronated forms thereof.

6. The two-component polyurethane adhesive composition according to Claim 1, wherein the polyol having two or more OH groups and a hydrogen-bridging group is in an amount of from at least 1 wt% to less than 22 wt% based on the weight of the polyol component.

7. A curable mixture comprising the polyisocyanate component and the polyol component according to Claim 1.

8. A laminate comprising the curable mixture according to Claim 7.

## Patentansprüche

1. Zweikomponenten-Polyurethan-Klebstoffzusammensetzung, umfassend eine aromatische Polyisocyanatkomponente und eine Polyolkomponente, umfassend mindestens ein Polyesterpolyol und ein Polyol, das zwei oder mehr OH-Gruppen und eine Wasserstoffbrückengruppe aufweist; wobei die aromatische Polyisocyanatkomponente eine durchschnittliche NCO-Funktionalität von mindestens 2,8 und nicht mehr als 5 aufweist; das Polyesterpolyol eine OH-Funktionalität von mindestens 1,8 und nicht mehr als 3 und eine OH-Zahl zwischen 2 und 45 mg KOH/g aufweist; und das Polyol, das zwei oder mehr OH-Gruppen und eine Wasserstoffbrückengruppe aufweist, eine Säurezahl von mindestens 50 mg KOH/g und nicht mehr als 200 mg KOH/g und eine OH-Funktionalität von mindestens 1,8 und nicht mehr als 3 aufweist, wobei die aromatische Polyisocyanatkomponente ein aromatisches Polyisocyanataddukt oder ein aromatisches Polyisocyanattrimer ist und wobei das aromatische Diisocyanatmonomer, das verwendet wird, um das Addukt oder das Trimer herzustellen, aus der Gruppe ausgewählt ist, bestehend aus Isomeren von Methylendiphenyldiisocyanat ("MDI"), Isomeren von Toluoldiisocyanat ("TDI"), Isomeren von Naphthalindiisocyanat ("NDI") und Kombinationen davon; und wobei das Gewichtsverhältnis der ersten Polyolkomponente zu der Polyisocyanatkomponente von 100 : 15 bis 100 : 40 beträgt.

2. Zweikomponenten-Polyurethan-Klebstoffzusammensetzung nach Anspruch 1, wobei das aromatische Diisocyanatmonomer ein Isomer von Toluoldiisocyanat ("TDI") ist.

3. Zweikomponenten-Polyurethan-Klebstoffzusammensetzung nach Anspruch 1, wobei die aromatische Polyisocyanatkomponente einen %NCO von mindestens 7 Gew.-% und nicht mehr als 19 Gew.-% aufweist.

4. Zweikomponenten-Polyurethan-Klebstoffzusammensetzung nach Anspruch 1, wobei das Polyesterpolyol in einer Menge von mindestens 78 Gew.-% bis weniger als 99 Gew.-%, basierend auf dem Gewicht der Polyolkomponente, vorliegt.

5. Zweikomponenten-Polyurethan-Klebstoffzusammensetzung nach Anspruch 1, wobei die Wasserstoffbrückengruppe aus O=C-O⁻, O=C- C-O⁻, und O=C-C=C-O- und pronierten Formen davon ausgewählt ist.

6. Zweikomponenten-Polyurethan-Klebstoffzusammensetzung nach Anspruch 1, wobei das Polyol, das zwei oder mehr OH-Gruppen und eine Wasserstoffbrückengruppe aufweist, in einer Menge von mindestens 1 Gew.-% bis weniger als 22 Gew.-%, basierend auf dem Gewicht der Polyolkomponente, vorliegt.

7. Härtbare Mischung, umfassend die Polyisocyanatkomponente und die Polyolkomponente nach Anspruch 1.

8. Laminat, umfassend die härtbare Mischung nach Anspruch 7.

## Revendications

1. Composition adhésive de polyuréthane à deux composants comprenant un composant polyisocyanate aromatique et un composant polyol comprenant au moins un polyol de polyester et un polyol ayant deux groupes OH ou plus et un groupe de pontage d'hydrogène ; dans laquelle le composant polyisocyanate aromatique a une fonctionnalité NCO moyenne d'au moins 2,8 et ne dépassant pas 5 ; le polyol de polyester a une fonctionnalité OH d'au moins 1,8 et ne dépassant pas 3, et un indice OH compris entre 2 et 45 mg KOH/g ; et le polyol ayant deux groupes OH ou plus et un groupe de pontage d'hydrogène a un indice d'acide d'au moins 50 mg KOH/g et ne dépassant pas 200 mg KOH/g, et une fonctionnalité OH d'au moins 1,8 et ne dépassant pas 3 ; dans laquelle le composant polyisocyanate aromatique est un produit d'addition de polyisocyanate aromatique ou un trimère de polyisocyanate aromatique et dans laquelle le monomère de diisocyanate aromatique utilisé pour préparer le produit d'addition ou le trimère est choisi dans le groupe constitué d'isomères de diisocyanate de diphényl méthylène (« MDI »), isomères de diisocyanate de toluène (« TDI »), isomères de diisocyanate de naphtalène (« NDI »), et combinaisons de ceux-ci ; et dans laquelle le rapport en poids du composant polyol au composant polyisocyanate va de 100:15 à 100:40.

2. Composition adhésive de polyuréthane à deux composants selon la revendication 1, dans laquelle le monomère de diisocyanate aromatique est un isomère de diisocyanate de toluène (« TDI »).

3. Composition adhésive de polyuréthane à deux composants selon la revendication 1, dans laquelle le composant polyisocyanate aromatique a un % de NCO d'au moins 7 % en poids et ne dépassant pas 19 % en poids.

4. Composition adhésive de polyuréthane à deux composants selon la revendication 1, dans laquelle le polyol de polyester est en une quantité d'au moins 78 % en poids à moins de 99 % en poids sur la base du poids du composant polyol.

5. Composition adhésive de polyuréthane à deux composants selon la revendication 1, dans laquelle le groupe de pontage d'hydrogène est choisi parmi O=C-O⁻, O=C-C-O-, et O=C-C=C-O⁻, et formes protonées de ceux-ci.

6. Composition adhésive de polyuréthane à deux composants selon la revendication 1, dans laquelle le polyol ayant deux groupes OH ou plus et un groupe de pontage d'hydrogène est en une quantité d'au moins 1 % en poids à moins de 22 % en poids sur la base du poids du composant polyol.

7. Mélange durcissable comprenant le composant polyisocyanate et le composant polyol selon la revendication 1.

8. Stratifié comprenant le mélange durcissable selon la revendication 7.
